# EUROPEAN PATENT SPECIFICATION

(11) **EP 0 298 398 B1**
(45) Date of publication and mention of the grant of the patent: **05.02.1997**
(21) Application number: 88110581.1
(22) Date of filing: 01.07.1988
(51) Int. Cl.: G01N 21/35

(54) **Analyzer of partial molecular structures**
Gerät zur Analyse von partiellen molekularen Strukturen
Analyseur de structures moléculaires partielles

(30) Priority: 04.07.1987 JP 167486/87
(43) Date of publication of application: 11.01.1989
(73) Proprietor: SHIMADZU CORPORATION, Kyotoshi Kyoto-fu 604 (JP); UBE INDUSTRIES, LTD., Ube-shi, Yamaguchi-ken 755 (JP)
(72) Inventor: Saito, Keiji, Yamaguchi, 755 (JP); Ichimura, Katsuhiko, Nakagyo-ku Kyotoshi Kyoto 604 (JP); Tajima, Takahiro, Nakagyo-ku Kyotoshi Kyoto 604 (JP)
(74) Representative: TER MEER - MÜLLER - STEINMEISTER & PARTNER

(56) References cited:
- DE-A- 2 014 171
- US-A- 3 896 312
- TRENDS IN ANALYTICAL CHEMISTRY Vol. 2, No. 11, 1983, pages 240-243, Cambridge, Great Britain; Z. HIPPE: "Computer based IR-identification of substructures"
- APPLIED SPECTROSCOPY Vol. 38, No. 3, 1984, pages 317-322, Baltimore, USA; D.E. HONIGS et al.: "A New Method for Obtaining Individual Component Spectra from Those of Complex Mixtures"
- ANALYTICAL CHEMISTRY Vol. 55, No. 11, 1983, pages 1694-1703, Eaton, USA; M.A. MARIS et al.: "Nonlinear Multicomponent Analysis by Infrared Spectrometry"
- CHEMIE-TECHNIK, SONDERDRUCK 11 1982, pages 321-333, Heidelberg, FRG; Dr. K. MOLT: "Quantitative Analytik in Labor and Produktion mit Hilfe der rechnerunterstützten Infrarot-Spektroskopie"

## Description

### BACKGROUND OF THE INVENTION

The present invention relates to an analyzer of partial molecular structures of a specimen material with an infrared absorption spectrum and, more particularly, to an analyzer of partial molecular structures with reference to the strength of an infrared absorption spectrum.

An infrared spectroscopic analysis is to analyze a partial molecular structure. This analysis is based on the position of an absorption peak (wavenumber) present in an infrared absorption spectrum obtained by an infrared spectrophotometer, so that a partial molecular structure corresponding to the wavenumber is analyzed as to be contained in the molecule or not.
Conventionally, information of the wavenumber of the absorption peak is taken out. However, the data amount of the wavenumber information is too limited to improve analysis accuracy. Further, the data of the wavenumber information of a reference oscillation is obtained by superimposing the infrared absorption spectrum of known reference materials with the same partial structure on the same graph. As the number of the examined materials increases to accumulate the data, high analysis accuracy could be expected. However, conventionally, it is difficult to accumulate new data on wavenumber data of the reference oscillation.

HIPPE discloses (TRENDS IN ANALYTICAL CHEMISTRY; vol. 2, no. 11, 1983, pages 240-243; " Computer based IR-identification of substructures") a method for interpreting an infrared sprectrum of a complex molecule, in order to determine its chemical structure. The spectrum of an unknown substance is listed in an IR-matrix containing several intensities of absorption and the respective wave numbers where the intensity peaks appear. The IR-matrix is interpreted by decision functions which are individually given by logical conditions and basic parameters for several known selected substructures. The algorithm allows the recognition of 32 substructures, each having its own decision function. However, the definition of the decision functions requires extensive experience and careful selection.

US-A-3,896,312 discloses a method for comparing the infrared spectrum of an unidentified oil sample to the infrared spectra of a plurality of identified oil samples. In a first step, a reference libary of identified oil samples is prepared as a basis of comparison. For each reference sample, an infrared spectrum with the transmittance at each of the characteristic frequencies is measured. The transmittancies are converted to absorbance values which are then normalized. Next, an infrared spectrum of the unidentified oil sample is prepared and the relationship between the unidentified sample and each of the reference samples is defined by a ratio at each characteristic frequency of the absorbtivity of the unidentified sample to that of a particular reference sample. These ratios are averaged and normalized for each reference sample for which data have been stored in a computer file. The percent difference between this normalized ratio and 1.0 is determined, and finally the number of bands with a percent difference less than a certain value is listed.

### SUMMARY OF THE INVENTION

Accordingly, it is an object of the present invention to provide an improved analyzer for analyzing partial molecular structures for enhancing analysis accuracy and accumulating data.

It is another object fo the present invention to provide an improved analyzer for analyzing partial molecular structures for enhancing analysis accuracy by evaluating the strength ratio of a peak of an absorption spectrum.

In accordance with the present invention, an analyzer for analyzing partial molecular structures of a specimen comprises:
data storage means for storing data of at least one sample being formed on the basis of a known partial structure, i.e. for storing a plurality of wave number ranges where peaks of an infrared absorption spectrum of the sample appear, and for storing strength ratios of said peaks;
detection means for detecting peaks and respective wave number ranges of an infrared absorption spectrum of said specimen;
determination means for determining that the specimen has a probability of being one having the known partial structure, when the number of the stored wave number ranges of the sample in which peaks of the specimen do exist is equal to or more than a predetermined number;
strength ratio calculating means for calculating strength ratios of the peaks of the absorption spectrum of said specimen in the wave number ranges, when determined that the specimen has a probability of being one having the known partial structure;
value of probability calculating means for calculating a value of probability, which is indicative of the probability that the partial structure within the specimen is the same as the one within the respective sample, said value of probability being calculated by a comparison of the strength ratios of peaks in several wave number ranges of said specimen and said samples stored in the data storage means; and
output means for outputting the highest values of probability in a descending order.

### BRIEF DESCRIPTION OF THE DRAWINGS

The present invention will become more fully understood from the detailed description given hereinbelow and the accompanying drawings which are given by way of illustration only, and thus are not limitative of the present invention and wherein:
FIG.1 (a) and FIG.1 (b) are flow chart showing the operation of an analyzer of a partial molecular structure according to a preferred embodiment of the present invention;
FIG.2 is a block diagram of a circuit implemented within the analyzer; and
FIG.3 is an infrared absorption spectrum of phenacetin obtained by an infrared spectrophotometer of the analyzer.

### DESCRIPTION OF THE PREFERRED EMBODIMENT

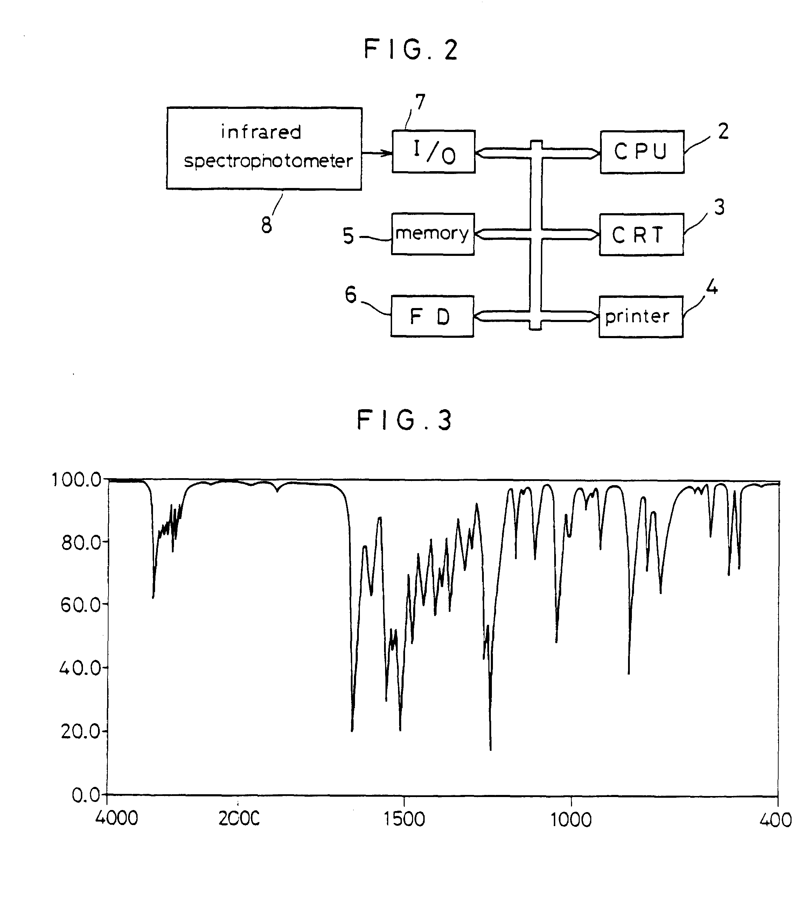

An analyzer of a partial molecular structure according to a preferred embodiment will be described below. FIG.2 shows a block diagram of a circuit implemented within an analyzer 1 of a partial molecular structure. A central processing unit (CPU) 2 is provided for conducting an analysis process as described below and for controlling input/output of data. A cathode Ray Tube (CRT) 3, a printer 4, and a memory 5 for storing data are connected to the CPU 2. A floppy disk device 6 is further connected to the CPU 2. as an auxiliary memory. Of course, instead of or in addition to the floppy disk device 6, a hard disk device, a magnetic tape device, or an optical disk may be connected to the CPU 2.

Via an input/output device 7, an infrared spectrophotometer 8 is connected to the CPU 2. An infrared absorption spectrum measured by the infrared spectrophotometer 8 is transmitted to the CPU 2.

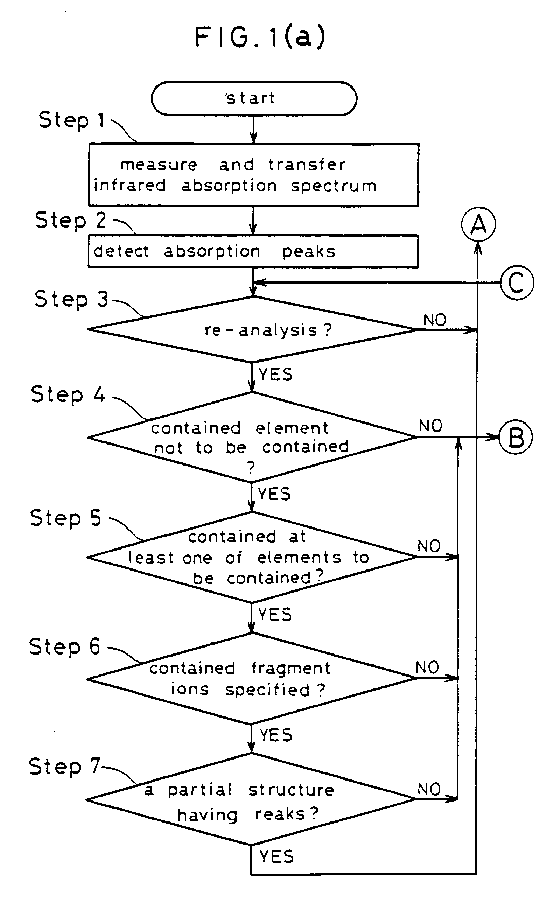

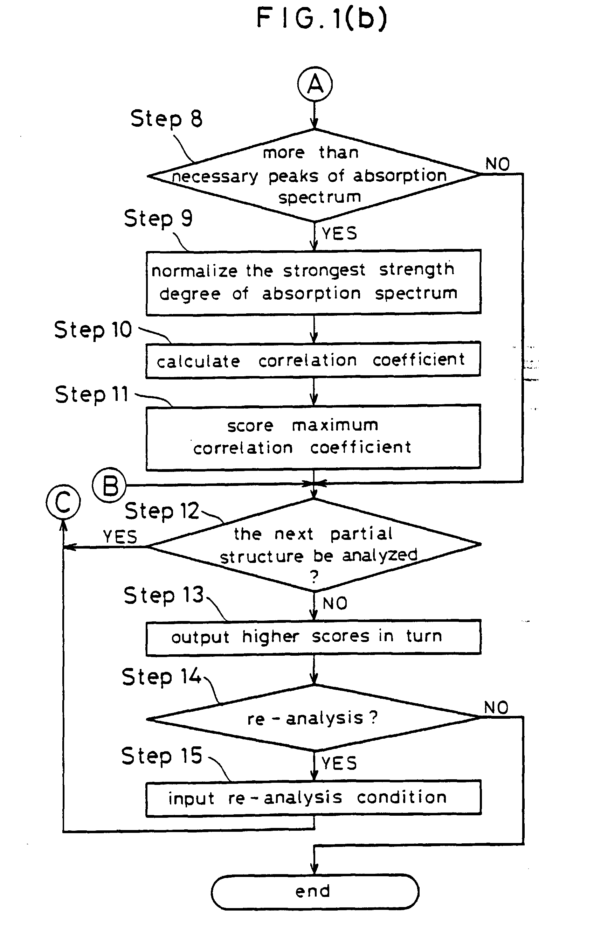

Now, the operation of the analyzer 1 will be described with reference to FIG.1 (a) and FIG-1 (b) showing its flow chart.

Step 1: A specimen is set in the infrared spectrophotometer 8 to measure an infrared absorption spectrum and transmit the spectrum to the CPU 2. An example of such infrared absorption spectrum is illustrated in FIG.3, showing a spectrum of phenacetin (CH₃-CO-NH-C₆H₄ -O-C₂H₅) measured by a diffused reflection method.

The measured infrared absorption spectrum is then normalized to cancel an error due to density. The normalization is calculated by transferring the absorption spectrum, so that the minimum of the absorption spectrum is set to be "0" while the maximum of the absorption spectrum is set to be "99".

Step 2: The wavenumber (cm⁻¹) at the peak of absorption in the spectrum and the strength at the peak are obtained and listed up. Table 1 shows an example.

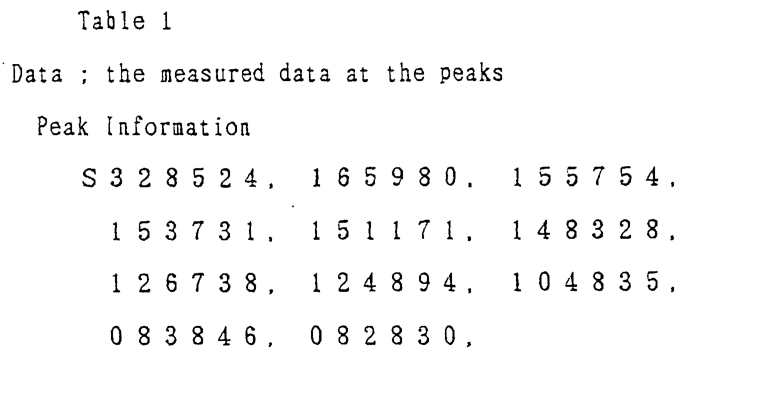

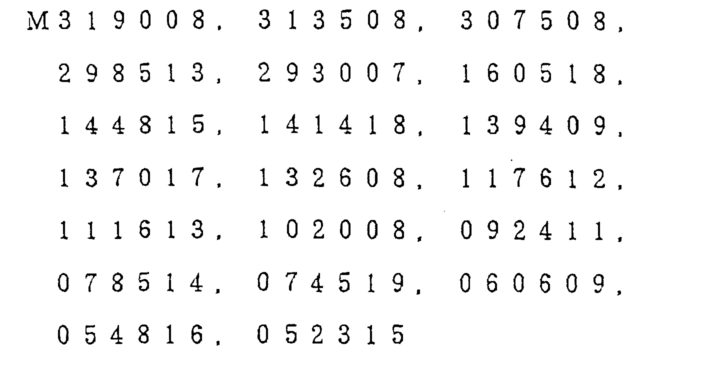

In Table 1, "S" represents "Strong Peak", so that "S 328524" indicates that the peak of a strength degree 24 lies at a wavenumber 3285 cm⁻¹. "M" represents "Medium Peak", so that "M 319008 " indicates that the peak of a strength degree 08 lies at a wavenumber 3190 cm⁻¹. In Table 1. "Strong Peak" is referred to when a strength degree is equal to or more than 20 while "Medium Peak" is referreed to when a strength degree is equal to or less than 19 but equal to or more than 5.

Step 3; This step is used to determine a re-analysis or not. Now, it is first explained that no re-analysis procedure is conducted, so that step 8 is advanced.

Step 8; This step is used to determine whether the peaks of the absorption spectrum of the specimen are present or not as being equal to or more than a predetermined number, on a marked range of a wavenumber regarding every partial structure, "NO" determination at step 8 indicates that there is little probability for the partial structure to exist already in a reference sample. Then, the analysis ends to advance to step 12. "YES" determination at step 8 indicates that there is probability for the partial structure to exist to advance to step 9 and the following analysis steps.

Table 2 shows the wavenumber ranges of 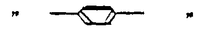 (1.4 - disubst benzene) as an example of a sample material. In Table 2, "st" indicates streching "ω" indicates out-of-plane bending or wagging, and "d" indicates a deformation.

**Table 2**

| Wavenumber range (cm⁻¹) | Attribution |
|---|---|
| 3100 ∼ 3000 | C H st |
| 1520 ∼ 1500 | C - C st |
| 1460 ∼ 1440 | C - C st |
| 860 ∼ 800 | C H ω |
| 730 ∼ 670 | ring d |

Step 9; This step is used to normalize the strength ratio of the peak of the absorption spectrum at the strongest strength ratio of the peak of the absorption spectrum. Table 3 shows an example of 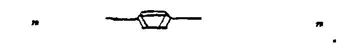 Table 3 shows the strength ratio of three sample materials with data stored in memory 5.

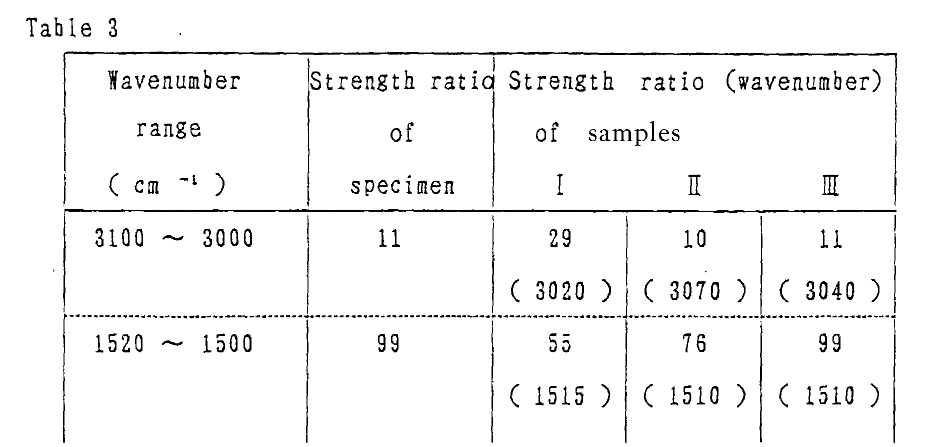

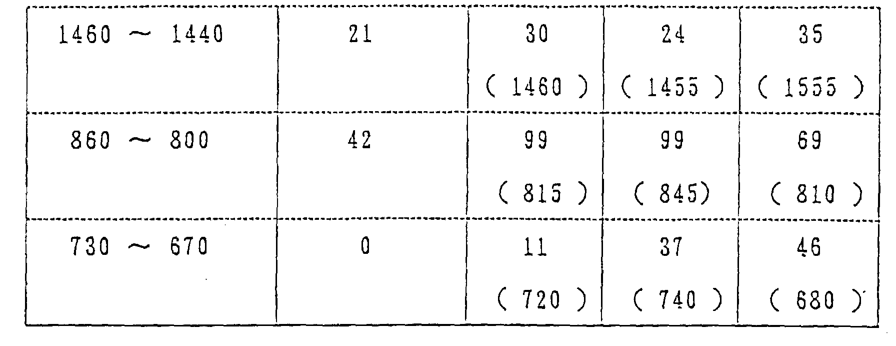

Step 10; This step is to calculate a correlation coefficient R as a probability value based on the strength ratio obtained at step 9 according to the following equation. 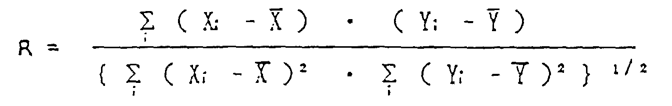 Where
i : the serial number of an absorption peak
Xᵢ : the absorption peak strength ratio (absorbance) of a sample
Yᵢ: the absorption peak strength ratio (absorbance) of a specimen material
$\overline{\text{X}}$: the average of the absorption peak strength ratio (absorbance) of the samples
$\overline{\text{Y}}$: the average of the absorption peak strength ratio (absorbance) of the specimen material

When data for a plurality of kinds of samples are present for a single partial structure, the correlation coefficient R is calculated for every sample. As to the example shown in Table 3, the correlation coefficient R is calculated for every of the three samples. If there is a specimen whose peak of the absorption spectrum is not within a marked wavenumber region. the strength ratio of the peak of the absorption spectrum is set to be "0",

As the correlation coefficient R is greater, there is higher probability for the partial structure to exist. As the evaluation factor (probability value), the factors as calculated with the following two equations can be used, alternatively. In this case, as the factors of the formulae are smaller, there is higher probability for the partial structure to exist already in a reference sample. 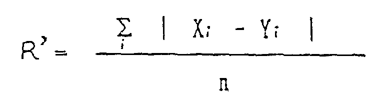 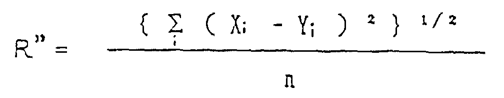 Where n: the number of the peaks of the absorption spectrum

Step 11: This step is used to extract the maximum among one or more correlation coefficients R calculated it step 10, so that the maximum is scored as "S" in the related partial structure.

Step 12: This step is used to determine whether the next partial structure is to be analyzed or not. When all of the partial structures are analyzed, step 13 is selected.

Step 13: In this step, the CRT 3 and or the printer 4 is operated to output all the partial structures in the sequence of the greater scores S. That is, the partial structures with the greater probability of existence are in turn outputted.

Step 14: This step is used to modify the analysis conditions of the same specimen and determine whether a re-analysis process is to be conducted or not. For re-analysis process, step 15 is selected. Without re-analysis process. the analysis has been completed.

Step 15: This step is used to input new analysis conditions for a re-analysis process. The analysis conditions are as follows;
(1) selection of a specific peak in an absorption spectrum
   (Only a partial structure containing the selected peak is outputted.)
(2) input of the results (fragment ion) obtained by mass analysis
   (Only a partial structure containing the seleted fragment ion is outputted.)
(3) input of chemical elements being present
   (Only a partial structure containing at least one of the inputted elements is outputted.)
(4) input of chemical elements not being present
   (Only a partial structure containing none of the inputted elements is outputted.)
(5) alteration of a wavenumber and its strength degree
   (After the wavenumber and the strength degree detected based on its peak data are erased, added, or altered, re-analysis process is conducted.)

Thus, additional information such as results obtained by other analysis methods than the infrared spectrum analysis may be included as analysis conditions, so as to focus on the partial structure to be analyzed, thereby shortening the analysis time period.

After the analysis conditions are inputted and altered, steps 4 to 7 are selected to conduct a process about the inputted analysis conditions.

Step 4: This step is used to determine whether the chemical elements inputted as not being present are contained within the partial structures or not. If they are not contained, step 5 and the subsequent steps are selected. If contained, step 12 is selected to analyze the next partial structure because it is not possible for the elements to be present within the partial structure.

Step 5: This step is used to determine whether at least one of the chemical elements inputted as being present is contained within the partial structure or not. If present, step 6 and the subsequent steps are selected. If not, step 12 is selected to analyze the next partial structure because it is not possible for the elements to be not present within the partial structure.

Step 6: This step 6 is selected to determine whether the fragment ion considered to be present, since it is detected by a mass analyzer, is contained within the partial structure or not. If present, step 7 and the subsequent steps are selected. If not, step 12 is selected to analyze the next partial structure since it is not possible for the fragment ion to be not present within the partial structure.

Step 7: This step is used to determine whether or not the partial structure contains a peak of the absorption spectrum within a selected specific range of a wavenumber. If yes, step 8 and the subsequent steps are advanced.
If not, step 12 is selected to analyze the next partial structure.

Step 8 and the subsequent steps are as described above. Steps 4 to 7 are used to analyze the information including the additional information rather than the infrared spectrum. The process of step 7 can make it possible to analyze in turn one of each peaks of an absorption spectrum to be analyzed.

It is possible to input the re-analysis condition of step 15 after the process of step 2 and at the start of the analysis. In case where a spectrum chart obtained by measuring an infrared absorption spectrum is present, the information of the absorption peak can be directly inputted into a computer, without measuring at step 1. The measured data are stored into a data base for analyzing the partial structure.

As described above, in accordance with the present invention, the partial structure analyzer can evaluate the strength degree of an absorption peak to improve analysis accuracy. The specimen data can be stored into a data storage means as data for sample materials, so that the accumulated data can improve analysis accuracy. Since the information inclusive the additional imformation rather than the infrared spectrum is used for analysis, the partial structure to be analyzed can be focused to shorten analysis time period.
In addition to the wavenumber of the peaks of an infrared absorption spectrum of a specimen, the analyzer of the present invention analyzes moleculars within partial structures using the strength of the peaks of the absorption spectrum so as to improve analysis accuracy.

While only certain embodiments of the present invention have been described, it will be apparent to those skilled in the art that various changes and modifications may be made therein without departing from the scope of the present invention as claimed.

## Claims

1. An analyzer for analyzing partial molecular structures of a specimen, comprising:
data storage means for storing data of at least one sample being formed on the basis of a known partial structure, i.e. for storing a plurality of wave number ranges where peaks of an infrared absorption spectrum of the sample appear, and for storing strength ratios of said peaks;
detection means for detecting peaks and respective wave number ranges of an infrared absorption spectrum of said specimen;
determination means for determining that the specimen has a probability of being one having the known partial structure. when the number of the stored wave number ranges of the sample in which peaks of the specimen do exist is equal to or more than a predetermined number;
strength ratio calculating means for calculating strength ratios of the peaks of the absorption spectrum of said specimen in the wave number ranges. when determined that the specimen has a probability of being one having the known partial structure;
value of probability calculating means for calculating a value of probability. which is indicative of the probability that the partial structure within the specimen is the same as the one within the respective sample. said value of probability being calculated by a comparison of the strength ratios of peaks in several wave number ranges of said specimen and said samples stored in the data storage means; and
output means for outputting the highest values of probability in a descending order.

2. The analyzer of claim 1, further comprising data accumulating means for accumulating the wave numbers of the absorption peaks of the specimen and the strength ratios of the absorption peaks calculated by said strength ratio calculating means into said data storage means when the wave numbers and the strength ratios are suitable as data.

3. The analyzer of claim 1, further comprising input means for inputting analysis results analyzed by an additional analyzer, so that said detection means is responsive to said inputting means for detecting said one or more partial structures with reference to said inputted analysis results.

## Patentansprüche

1. Gerät zur Analyse von partiellen molekularen Strukturen einer Probe, mit:
einem Datenspeicher zum Speichern von Daten von mindestens einem Muster, das auf der Grundlage einer bekannten Partialstruktur erzeugt worden ist, d.h. zum Speichern einer Mehrzahl von Wellenzahlbereichen, in denen Peaks eines Infrarotabsorptionsspektrums des Musters auftreten und zum Speichern von Stärkeverhältnissen der Peaks;
einer Erkennungseinrichtung zum Erkennen von Peaks und zugehörigen Wellenzahlbereichen eines Infrarotabsorptionsspektrums der Probe;
einer Feststellungseinrichtung zum Feststellen, daß die Probe eine Wahrscheinlichkeit aufweist, die bekannte Partialstruktur zu besitzen, wenn die Anzahl der gespeicherten Wellenzahlbereiche des Musters. in denen Peaks der Probe existieren, größer oder gleich einer vorbestimmten Anzahl ist:
einer Stärkeverhältnis-Berechnungseinrichtung zum Berechnen von Stärkeverhältnissen der Peaks des Absorptionsspektrums der Probe in den Wellenzahlbereichen, wenn festgestellt worden ist, daß die Probe eine Wahrscheinlichkeit aufweist, die bekannte Partialstruktur zu besitzen;
einer Berechnungseinrichtung zum Berechnen eines Wahrscheinlichkeitswerts, der die Wahrscheinlichkeit angibt. daß die Partialstruktur in der Probe die gleiche ist wie die in dem zugehörigen Muster, wobei derWahrscheinlichkeitswert durch einen Vergleich der Stärkeverhältnisse der Peaks in verschiedenen Wellenzahlbereichen der Probe und der in dem Datenspeicher gespeicherten Muster berechnet wird; und mit
einer Ausgabeeinrichtung zum Ausgeben der höchsten Wahrscheinlichkeitswerte in absteigender Reihenfolge.

2. Analysegerät nach Anspruch 1, **gekennzeichnet durch** eine Datensammeleinrichtung zum Sammeln der Wellenzahlen der Absorptionspeaks der Probe und der durch die Stärkeverhältnis-Berechnungseinrichtung berechneten Stärkeverhältnisse der Absorptionspeaks in dem Datenspeicher, wenn die Wellenzahlen und die Stärkeverhältnisse als Daten geeignet sind.

3. Analysegerät nach Anspruch 1, **gekennzeichnet durch** eine Eingabeeinrichtung zum Eingeben von Analyseergebnissen, die durch ein zusätzliches Analysegerät analysiert worden sind. so daß die Erkennungseinrichtung in Abhängigkeit von der Eingabeeinrichtung arbeitet, um eine oder mehrere Partialstrukturen unter Bezugnahme auf die eingegebenen Analyse ergebnisse zu erkennen.

## Revendications

1. Analyseur pour analyser des structures moléculaires partielles d'un spécimen, comportant :
des moyens de mémorisation de données pour mémoriser des données d'au moins un échantillon formé sur la base d'une structure partielle connue, c'est-à-dire pour mémoriser plusieurs plages de nombres d'onde où apparaissent des pics d'un spectre d'absorption des infrarouges de l'échantillon et pour mémoriser les rapports d'intensités desdits pics ;
des moyens de détection pour détecter des pics et des plages de nombres d'onde respectives d'un spéctre d'absorption des infrarouges dudit spécimen ;
des moyens de détermination pour déterminer que le spécimen a une probabilité d'être un spécimen ayant la structure partielle connue, lorsque le nombre de plages de nombres d'onde mémorisées de l'échantillon dans lesquelles les pics du spécimen existent est égal ou supérieur à un nombre prédéterminé ;
des moyens de calcul de rapport d'intensités pour calculer les rapports d'intensités des pics du spectre d'absorption dudit spécimen dans les plages de nombres d'onde, lorsqu'il est déterminé que le spécimen a une probabilité d'être un spécimen ayant la structure partielle connue ;
des moyens de calcul de valeur de probabilité pour calculer une valeur de probabilité, qui est représentative de la probabilité que la structure partielle existant dans le spécimen est la même que celle existant dans l'échantillon respectif, ladite valeur de probabilité étant calculée par une comparaison des rapports d'intensités des pics dans plusieurs plages de nombres d'onde dudit spécimen et desdits échantillons mémorisées dans les moyens de mémorisation de données ; et
des moyens d'émission pour émettre les valeurs de probabilité les plus élevées dans un ordre décroissant.

2. Analyseur selon la revendication 1, comportant de plus des moyens d'accumulation de données pour accumuler les nombres d'onde des pics d'absorption du spécimen et les rapports d'intensités des pics d'absorption calculés par lesdits moyens de calcul de rapport d'intensités à l'intérieur desdits moyens de mémorisation de données lorsque les nombres d'onde et les rapports d'intensités sont adaptés en tant que données.

3. Analyseur selon la revendication 1, comportant de plus des moyens d'entrée pour entrer des résultats d'analyse analysés par un analyseur supplémentaire, de sorte que lesdits moyens de détection répondent auxdits moyens d'entrée pour détecter lesdites une ou plusieurs structures partielles en référence auxdits résultats d'analyse entrés.
